# EUROPEAN PATENT SPECIFICATION

(11) **EP 0 936 197 B1**
(45) Date of publication and mention of the grant of the patent: **05.02.2003**
(21) Application number: 99105036.0
(22) Date of filing: 25.06.1997
(51) Int. Cl.: C03C 4/02, C03C 4/08, C03C 3/087

(54) **Green privacy glass**
Grünes Vertraulichkeitsglas
Verre vert pour la confidentialité

(30) Priority: 02.07.1996 US 21034; 04.06.1997 US 869221
(43) Date of publication of application: 18.08.1999
(62) Divisional of application: 97110335.3
(73) Proprietor: PPG Industries Ohio, Inc., Cleveland, OH 44111 (US)
(72) Inventor: Shelestak, Larry J., Bairdford Pennsylvania 15006 (US); Heithoff, Robert B, Gibsonia Pennsylvania 15044 (US); Calabrese, Andrew, Wexford Pennsylvania 15090 (US); Krummwiede, John F, Cheswick Pennsylvania 15024 (US); Longobardo, Anthony v., Butler Pennsylvania 16001 (US)
(74) Representative: Sternagel, Fleischer, Godemeyer & Partner Patentanwälte

(56) References cited:
- EP-A- 0 536 049
- EP-A- 0 653 388
- EP-A- 0 705 800
- EP-A- 0 798 271
- EP-A- 0 802 168
- EP-A- 0 816 296
- DE-A- 19 636 303
- GB-A- 2 289 273
- US-A- 4 104 076
- US-A- 5 023 210

## Description

The invention refers to *specific* green colored, infrared and ultraviolet absorbing glasses having a base glass portion and a solar radiation absorbing colorant portion to control the luminous transmittance (LTA), ultraviolet transmittance (TSUV), total solar infrared transmittance (TSIR) and the total solar energy transmittance (TSET).

This invention relates particularly to a tinted, green colored soda-lime-silica glass having a low luminous transmittance that makes it highly desirable for use as a privacy glazing in vehicles, such as the side and rear windows in vans. In particular, the glass has a luminous transmittance of 5.2 to 15.15 percent. As used herein, the term "green colored" is meant to include glasses that have a dominant wavelength of about 550 to 551 nanometers (nm) and may be characterized as green blue, green yellow or green gray in color. In addition, the glass of the present invention generally exhibits lower infrared and ultraviolet radiation transmittance when compared to typical green glasses used in automotive applications. The glass is also compatible with float glass manufacturing methods.

Various dark tinted, infrared and ultraviolet radiation absorbing glass compositions are known in the art. The primary colorant in typical dark tinted automotive privacy glasses is iron, which is usually present in both the Fe₂O₃ and FeO forms. Some glasses use cobalt, selenium and, optionally, nickel in combination with iron to further control infrared and ultraviolet radiation and color, for example as disclosed in U.S.-A-4,873,206 to Jones; 5,278,108 to Cheng et al.; 5,308,805 to Baker et al.; and 5,393,593 to Gulotta et al., and EP-A-0 705 800. Others also include chromium with this combination of colorants as disclosed in U.S.-A-4,104,076 to Pons; 4,339,541 to Dela Ruye; 5,023,210 to Krumwiede et al; and 5,352,640 to Combes et al.; EP-A-0 536 049; FR-A-2,331,527 and CA-A-2,148,954. Still, other glasses may include additional materials, such as disclosed in WO 96/00194, which teaches the inclusion of fluorine, zirconium, zinc, cerium, titanium and copper in the glass composition and requires that the sum of the alkaline earth oxides be less than 10 wt.% of the glass. EP-A-802 168, which is a document under Art.54(3) and(4) EPC, describes a substantially nickel-free soda-lime glass composition having as colorants: 1.10 - 1.28 % total iron oxide, 0.22 - 0.33 % FeO, 180 - 250 ppm Co₃O₄, 22-40 ppm Se and 100 - 400 ppm Cr₂O₃ resulting in glasses having a luminous transmittance from 17.3 to 23.76 %, UV transmittance from 8.26 to 11.93 %, IR transmittance from 9.67 to 19.26 %, total solar transmittance from 13.87 to 22.07 % and a dominant wavelength from 494.07 to 567.56 nm and an excitation purity from 2.56 to 10.90 %. EP-A-798 271, which is a document under Art. 54(3) and (4) EPC, describes a dark gray colored soda-lime glass composition having as colorants 0.8 - 1.5 % total iron oxide, 0.1-0.3% FeO, 200 -500 ppm CoO, 5 - 150 ppm Se, 20 - 500 ppm Cr₂O₃ and 0 - 1 % TiO₂ resulting in a glass having luminous transmittance from 1.1 - 16.4 %, UV transmittance from 0.1 - 7.2%, total solar transmittance from 6.8-17.3 %, a dominant wavelength from 492.4 to 569.3 nm and an excitation purity from 0.3-6.7 %.

In producing infrared and ultraviolet radiation absorbing glasses, the relative amounts of iron and other additives must be closely monitored and controlled within an operating range to provide the desired color and spectral properties. It would be desirable to have a dark tinted green colored glass that may be used as a privacy glazing for vehicles to complement the green colored glasses typically used in automobiles that exhibits superior solar performance properties and is compatible with commercial float glass manufacturing techniques.
*It is the object of the invention to provide a green privacy glass which has the color shifted toward yellow and has also absorbance of UV-radiation.*
*This object is attained by a green colored, infrared and ultraviolet radiation absorbing glass article having a composition comprising a base glass portion comprising:*

| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |

and a solar radiation absorbing and colorant portion consisting essentially of:

| | |
|---|---|
| total iron | 1.93 percent by weight, |
| FeO | 0.386 percent by weight, |
| CoO | 398 PPM, |
| Se | 45 PPM, |
| Cr₂O₃ | 0.0375 percent by weight, |

the glass having a luminous transmittance (LTA) of 5.20 percent at at least one thickness in the range of 1.8 to 5.0 mm and a total solar ultraviolet transmittance (TSUV) of 2.40 percent, a total solar infrared transmittance (TSIR) of 9.28 percent and a total solar energy transmittance (TSET) of 7.5 percent at at least one thickness between 3.91 mm and 4.06 mm.
The solution includes as a further embodiment a green colored, infrared and ultraviolet radiation absorbing glass article having a composition comprising a base glass portion comprising:

| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |

and a solar radiation absorbing and colorant portion consisting essentially of:

| | |
|---|---|
| total iron | 1.28 to 1.32 percent by weight, |
| FeO | 0.264 to 0.384 percent by weight, |
| CoO | 208 to 242 PPM, |
| Se | 28 to 30 PPM, |
| Cr₂O₃ | 0.0280 to 0.0290 percent by weight, |

the glass having a luminous transmittance (LTA) of 15.01 to 15.15 percent at at least one thickness in the range of 1.8 to 5.0 mm and a total solar ultraviolet transmittance (TSUV) of 7.47 to 8.59 percent, a total solar infrared transmittance (TSIR) of 9.96 to 15.69 percent and a total solar energy transmittance (TSET) of 12.02 to 15.28 percent at at least one thickness between 3.91 mm and 4.06 mm.
Preferably the color of the glass is characterized by a dominant wavelength in the range of 550.53 to 551.11 nanometers and an excitation purity of 3.66 to 3.89 percent, at at least one thickness between 3.91 mm and 4.06 mm.

The base glass of the present invention, that is, the major constituents of the glass without infrared or ultraviolet absorbing materials and/or colorants, which are the object of the present invention, is commercial soda-lime-silica glass characterized as follows:

| Weight Percent | |
|---|---|
| SiO₂ | 66-75 |
| Na₂O | 10-20 |
| CaO | 5-15 |
| MgO | 0-5 |
| Al₂O₃ | 0-5 |
| K₂O | 0-5 |

As used herein, all "weight percent (wt.%)" values are based on the total weight of the final glass composition.

To this base glass, the present invention adds infrared and ultraviolet radiation absorbing materials and colorants in the form of iron, cobalt, selenium, chromium and, optionally, titanium. As disclosed herein, iron is expressed in terms of Fe₂O₃ and FeO, cobalt is expressed in terms of CoO, selenium is expressed in terms of elemental Se, chromium is expressed in terms of Cr₂O₃. It should be appreciated that the glass compositions disclosed herein may include small amounts of other materials, for example melting and refining aids, tramp materials or impurities. It should be further appreciated that in one embodiment of the invention, small amounts of additional materials may be included in the glass to improve the solar performance of the glass as will be discussed later in more detail.

The iron oxides in a glass composition perform several functions. Ferric oxide, Fe₂O₃, is a strong ultraviolet radiation absorber and operates as a yellow colorant in the glass. Ferrous oxide, FeO, is a strong infrared radiation absorber and operates as a blue colorant. The total amount of iron present in the glasses disclosed herein is expressed in terms of Fe₂O₃ in accordance with standard analytical practice but that does not imply that all of the iron is actually in the form of Fe₂O₃. Likewise, the amount of iron in the ferrous state is reported as FeO, even though it may not actually be present in the glass as FeO. In order to reflect the relative amounts of ferrous and ferric iron in the glass compositions disclosed herein, the term "redox" shall mean the amount of iron in the ferrous state (expressed as FeO) divided by the amount of total iron (expressed as Fe₂O₃). Furthermore, unless stated otherwise, the term "total iron" in this specification shall mean total iron expressed in terms of Fe₂O₃ and the term "FeO" shall mean iron in the ferrous state expressed in terms of FeO.

Se is an ultraviolet and infrared radiation absorbing colorant that imparts a pink or brown color to soda-lime-silica glass. Se may also absorb some infrared radiation and its use tends to decrease redox. CoO operates as a blue colorant and does not exhibit any appreciable ultraviolet or infrared radiation absorbing properties. Cr₂O₃ imparts a green color to the glass and helps control the final glass color. It is believed that the chromium may also provide some ultraviolet radiation absorption. A proper balance between the iron, i.e. ferric and ferrous oxides, chromium, selenium, cobalt and optionally titanium content is required to obtain the desired green colored privacy glass with the desired spectral properties.

The glass of the present invention may be melted and refined in a continuous, large-scale, commercial melting operation and formed into flat glass sheets of varying thicknesses by the float method in which the molten glass is supported on a pool of molten metal, usually tin, as it assumes a ribbon shape and is cooled. It should be appreciated that as a result of forming the glass on molten tin, measurable amounts of tin oxide may migrate into surface portions of the glass on the side that was in contact with the tin. Typically, a piece of float glass has an SnO₂ concentration of at least 0.05 to 2 wt.% in the first 25 microns below the surface of the glass that was in contact with the tin. Typical background levels of SnO₂ may be as high as 30 parts per million (PPM).

The melting and forming arrangements used to produce the glass compositions of the present invention include, but are not limited to a conventional, overhead fired continuous melting operation, as is well known in the art, or a multi-stage melting operation, as disclosed in U.S.-A-4,381,934 to Kunkle et al.; 4,792,536 to Pecoraro et al. and 4,886,539 to Cerutti et al. If required, a stirring arrangement may be employed within the melting and/or forming stages of the glass production operation to homogenize the glass in order to produce glass of the highest optical quality.

Table 1 illustrate examples of glass compositions which embody the principles of the present invention. The examples in Table 1 are computer modeled compositions generated by a glass color and spectral performance computer model developed by PPG Industries, Inc. The spectral properties shown for Table 1 are based on a reference thickness of 4.06 mm (0.160 inches). For comparison purposes, the spectral properties of the examples may be approximated at different thicknesses using the formulas disclosed in U.S.-A-4,792,536. Only the iron, cobalt, selenium, chromium portions of the examples are listed in the table. With respect to the transmittance data provided in the tables, the luminous transmittance (LTA) is measured using C.I.E. standard illuminant "A" with a 2° observer over the wavelength range 380 to 770 nanometers and glass color, in terms of dominant wavelength and excitation purity, is measured using C.I.E. standard illuminant "C" with a 2° observer, following the procedures established in ASTM E308-90. The total solar ultraviolet transmittance (TSUV ) is measured over the wavelength range 300 to 400 nanometers, total solar infrared transmittance (TSIR) is measured over the wavelength range 720 to 2000 nanometers, and total solar energy transmittance (TSET) is measured over the wavelength range 300 to 2000 nanometers. The TSUV, TSIR and TSET transmittance data are calculated using Parry Moon air mass 2.0 direct solar irradiance data and integrated using the Trapezoidal Rule, as is known in the art.

The optical properties reported in Table 1 are the expected properties of a glass having a base glass composition and colorants, generally as discussed herein, based upon the absorption coefficients of the glass' constituents, assuming that the glass is homogeneous throughout and is manufactured by a conventional float glass process, as is well known in the art.

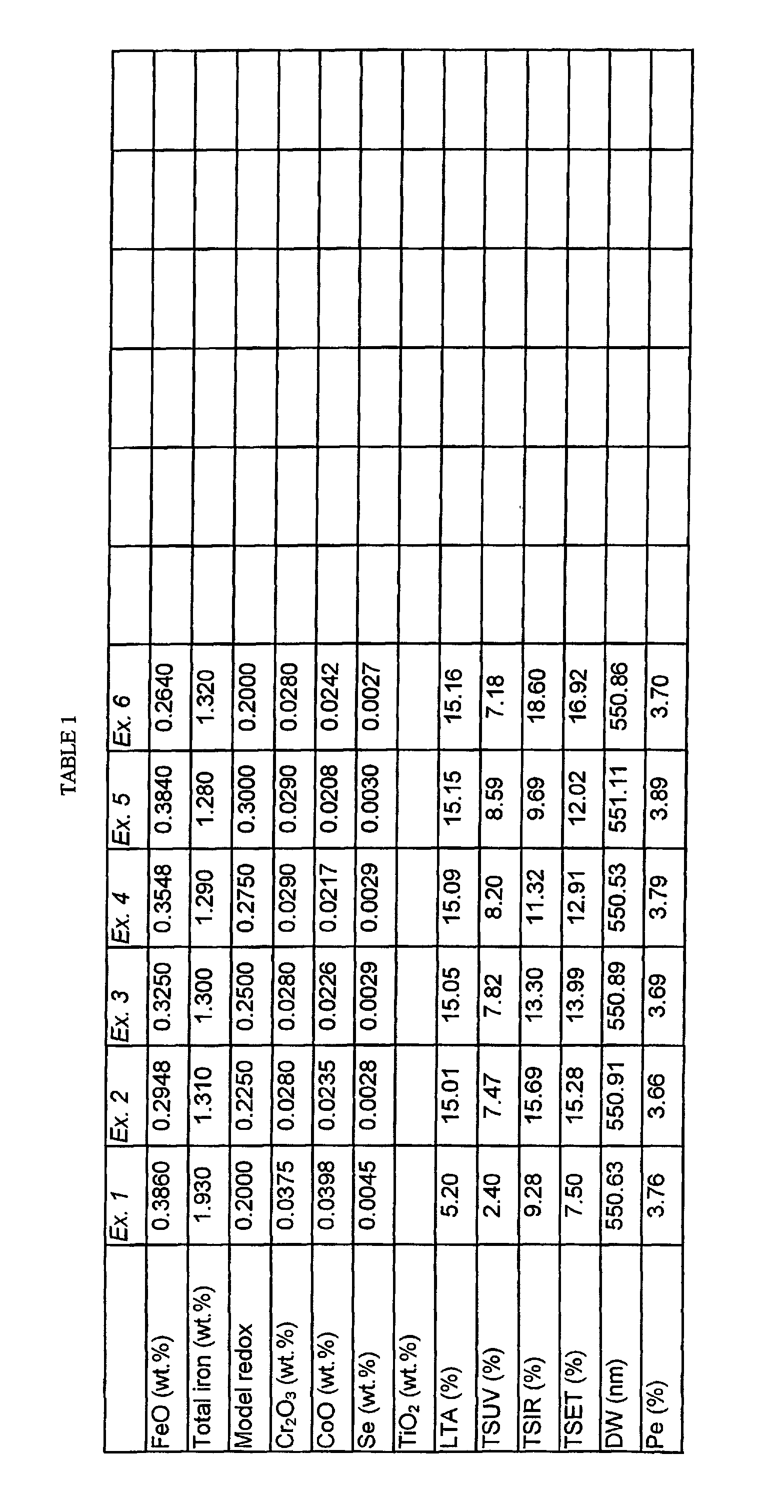

Referring to Table 1, the present invention provides a green colored glass using a standard soda-lime-silica glass base composition and additionally iron, cobalt, selenium and chromium, as infrared and ultraviolet radiation absorbing materials and colorants. As may be seen, not all of the examples are the same color, as indicated by the dominant wavelength (DW) and excitation purity (Pe).

It is expected that the spectral properties of the glass compositions disclosed herein will change after tempering the glass and further upon prolonged exposure to ultraviolet radiation, commonly referred to as solarization. In particular, it is believed that tempering and solarization of the glass compositions disclosed herein will increase the LTA and reduce the TSUV, TSIR and TSET. As a result, in one embodiment of the invention, a glass composition may have selected spectral properties that initially fall outside the desired ranges previously discussed but fall within the desired ranges after tempering and/or solarization.

Glass made by the float process typically ranges from a sheet thickness of about 1 millimeters to 10 millimeters. For vehicle glazing applications, it is preferred that the glass sheets having a composition and spectral properties as disclosed herein have a thickness within the range of 1.8 to 5 mm (0.071 to 0.197 inches). It is anticipated that when using a single glass ply, the glass will be tempered, e.g. for an automotive side or rear window, and when multiple plies are used, the glass will be annealed and laminated together using a thermoplastic adhesive, such as polyvinyl butyral.

## Claims

1. A green colored, infrared and ultraviolet radiation absorbing glass article having a composition comprising a base glass portion comprising:
| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |
and a solar radiation absorbing and colorant portion consisting essentially of:
| | |
|---|---|
| total iron | 1.93 percent by weight, |
| FeO | 0.386 percent by weight, |
| CoO | 398 PPM, |
| Se | 45 PPM, |
| Cr₂O₃ | 0.0375 percent by weight, |
the glass having a luminous transmittance (LTA) of 5.20 percent at a thickness of 4.06 mm and a total solar ultraviolet transmittance (TSUV) of 2.40 percent, a total solar infrared transmittance (TSIR) of 9.28 percent and a total solar energy transmittance (TSET) of 7.5 percent at a thickness of 4.06 mm.

2. A green colored, infrared and ultraviolet radiation absorbing glass article having a composition comprising a base glass portion comprising:
| | |
|---|---|
| SiO₂ | 66 to 75 percent by weight, |
| Na₂O | 10 to 20 percent by weight, |
| CaO | 5 to 15 percent by weight, |
| MgO | 0 to 5 percent by weight, |
| Al₂O₃ | 0 to 5 percent by weight, |
| K₂O | 0 to 5 percent by weight, |
and a solar radiation absorbing and colorant portion consisting essentially of:
| | |
|---|---|
| total iron | 1.28 to 1.32 percent by weight, |
| FeO | 0.264 to 0.384 percent by weight, |
| CoO | 208 to 242 PPM, |
| Se | 28 to 30 PPM, |
| Cr₂O₃ | 0.0280 to 0.0290 percent by weight, |
the glass having a luminous transmittance (LTA) of 15.01 to 15.15 percent at a thickness of 4.06 mm and a total solar ultraviolet transmittance (TSUV) of 7.47 to 8.59 percent, a total solar infrared transmittance (TSIR) of 9.96 to 15.69 percent and a total solar energy transmittance (TSET) of 12.02 to 15.28 percent at a thickness of 4.06 mm.

3. The article as in claims 1 or 2, wherein the color of the glass is **characterized by** a dominant wavelength in the range of 550.53 to 551.11 nanometers and an excitation purity of 3.66 to 3.89 percent, at a thickness of 4.06 mm.

4. The article as in claims 1 to 3, comprising a flat glass sheet.

5. The article as in claim 4, wherein said sheet has traces of tin oxide in a surface portion.

## Patentansprüche

1. Grüngefärbtes, infrarote und ultraviolette Strahlung absorbierendes Glaserzeugnis mit einer Grundglaszusammensetzung, enthaltend:
| | |
|---|---|
| SiO₂ | 66-75 Gew.-%, |
| Na₂O | 10-20 Gew.-%, |
| CaO | 5-15 Gew.-%, |
| MgO | 0- 5 Gew.-%, |
| Al₂O₃ | 0- 5 Gew.-%, |
| K₂O | 0- 5 Gew.-%, |
und einen Sonnenstrahlen absorbierenden und färbenden Anteil, im wesentlichen bestehend aus:
| | |
|---|---|
| Gesamteisen | 1,93 Gew.-%, |
| FeO | 0,386 Gew.-%, |
| CoO | 398 ppm, |
| Se | 45 ppm, |
| Cr₂O₃ | 0,0375 Gew.-% |
wobei das Glas bei einer Dicke von 4,06 mm eine Lichtdurchlässigkeit (LTA) von 5,20% und eine Gesamtdurchlässigkeit für Sonnen-Ultraviolettstrahlung (TSUV) von 2,40%, eine Gesamtdurchlässigkeit für Sonnen-Infrarotstrahlung (TSIR) von 9,28% und eine Gesamtdurchlässigkeit für Sonnenenergie (TSET) von 7,5% aufweist.

2. Grüngefärbtes, infrarote und ultraviolette Strahlung absorbierendes Glaserzeugnis mit einer Grundglaszusammensetzung, enthaltend:
| | |
|---|---|
| SiO₂ | 66-75 Gew.-%, |
| Na₂O | 10-20 Gew.-%, |
| CaO | 5-15 Gew.-%, |
| MgO | 0- 5 Gew.-%, |
| Al₂O₃ | 0- 5 Gew.-%, |
| K₂O | 0- 5 Gew.-%, |
und einen Sonnenstrahlen absorbierenden und färbenden Anteil, im wesentlichen bestehend aus:
| | |
|---|---|
| Gesamteisen | 1,28 - 1,32 Gew.-%, |
| FeO | 0,264 - 0,384 Gew.-%, |
| CoO | 208 - 242 ppm, |
| Se | 28 - 30 ppm, |
| Cr₂O₃ | 0,0280 - 0,0290 Gew.-%, |
wobei das Glas bei einer Dicke von 4,06 mm eine Lichtdurchlässigkeit (LTA) von 15,01-15,15% und eine Gesamtdurchlässigkeit für Sonnen-Ultraviolettstrahlung (TSUV) von 7,47-8,59%, eine Gesamtdurchlässigkeit für Sonnen-Infrarotstrahlung (TSIR) von 9,96-15,69% und eine Gesamtdurchlässigkeit für Sonnenenergie (TSET) von 12,02-15,28% aufweist.

3. Erzeugnis nach Ansprüchen 1 oder 2, **dadurch gekennzeichnet, dass** die Farbe des Glases **gekennzeichnet ist durch** eine farbtongleiche Wellenlänge im Bereich von 550,53 bis 551,11 nm und eine Anregungsreinheit von 3,66-3,89% bei einer Dicke von 4,06 mm.

4. Erzeugnis nach Ansprüchen 1-3, **dadurch gekennzeichnet, dass** es eine Flachglasscheibe enthält.

5. Erzeugnis nach Anspruch 4, **dadurch gekennzeichnet, dass** die Scheibe Spuren von Zinnoxid in einem Oberflächenteil aufweist.

## Revendications

1. Article de verre absorbant les rayonements infrarouge et ultraviolet, de couleur verte ayant une composition comprenant une partie de verre de base comprenant :
| | |
|---|---|
| SiO₂ | 66 à 75% en poids, |
| Na₂O | 10 à 20% en poids, |
| CaO | 5 à 15% en poids, |
| MgO | 0 à 5% en poids, |
| Al₂O₃ | 0 à 5% en poids, |
| K₂O | 0 à 5% en poids, |
et une partie absorbant le rayonnement solaire et colorante se composant essentiellement de :
| | |
|---|---|
| fer total | 1,93% en poids, |
| FeO | 0,386% en poids, |
| CoO | 398 ppm, |
| Se | 45 ppm, |
| Cr₂O₃ | 0,0375% en poids, |
le verre ayant une transmission lumineuse (TAL) de 5,20% à une épaisseur de 4,06 mm ainsi qu'une transmission ultraviolette solaire totale (TUST) de 2,40%, une transmission infrarouge solaire totale (TIST) de 9,28% et une transmission d'énergie solaire totale (TEST) de 7,5% à une épaisseur de 4,06 mm.

2. Article de verre absorbant les rayonnements infrarouge et ultraviolet, de couleur verte ayant une composition comprenant une partie de verre de base comprenant :
| | |
|---|---|
| SiO₂ | 66 à 75% en poids, |
| Na₂O | 10 à 20% en poids, |
| CaO | 5 à 15% en poids, |
| MgO | 0 à 5% en poids, |
| Al₂O₃ | 0 à 5% en poids, |
| K₂O | 0 à 5% en poids, |
et une partie absorbant le rayonnement solaire et colorante se composant essentiellement de :
| | |
|---|---|
| fer total | 1,28 à 1,32% en poids, |
| FeO | 0,264 à 0,384% en poids, |
| CoO | 208 à 242 ppm, |
| Se | 28 à 30 ppm, |
| Cr₂O₃ | 0,0280 à 0,0290% en poids, |
le verre ayant une transmission lumineuse (TAL) de 15,01 à 15,15% à une épaisseur de 4,06 mm ainsi qu'une transmission ultraviolette solaire totale (TUST) de 7,47 à 8,59%, une transmission infrarouge solaire totale (TIST) de 9,96 à 15,69% et une transmission d'énergie solaire totale (TEST) de 12,02 à 15,28% à une épaisseur de 4,06 mm.

3. Article suivant l'une ou l'autre des revendications 1 et 2, dans lequel la couleur du verre est **caractérisée par** une longueur d'onde dominante dans la gamme de 550,53 à 551,11 nanomètres et une pureté d'excitation de 3,66 à 3,89%, à une épaisseur de 4,06 mm.

4. Article suivant l'une quelconque des revendications 1 à 3, comprenant une feuille de verre plat.

5. Article suivant la revendication 4, dans lequel ladite feuille comporte des traces d'oxyde d'étain dans une partie en surface.
